# EUROPÄISCHE PATENTANMELDUNG

(11) **EP 3 723 269 A1**
(43) Veröffentlichungstag der Anmeldung: **14.10.2020**
(21) Anmeldenummer: 20163684.2
(22) Anmeldetag: 17.03.2020
(51) Int. Cl.: H02P 6/08, H02K 11/30, H02K 11/40, H02P 6/17, G08C 19/00

(54) **SCHNITTSTELLENAUSLEGUNG ZWISCHEN EINER STEUERUNG UND EINER KOMMUTIERUNGSELEKTRONIK VON GLEICHSTROMMOTOREN**

(30) Priorität: 11.04.2019 DE 102019109547
(71) Anmelder: ebm-papst Landshut GmbH, 84030 Landshut (DE)
(72) Erfinder: Kleine, Volker, 49143 Bissendorf (DE)
(74) Vertreter: Staeger & Sperling Partnerschaftsgesellschaft mbB

(57) **Zusammenfassung**

Die vorliegende Erfindung betrifft eine Schnittstelle (10) umfassend mehrere Schnittstellenverbindungen (32, 35, 45, 46) zwischen einer Steuerungselektronik (1) und einer Motorelektronik (2) eines EC-Motors (8), wobei die Spannungsversorgung der Steuerungselektronik (1) als gleichgerichtete Netzspannung der Motorelektronik (2) über eine Schnittstellenverbindung (32) zugeführt wird und die mehreren Schnittstellenverbindungen (32, 35, 45, 46) zwischen der Steuerungselektronik (1) und der Motorelektronik (2) auf einem gemeinsamen Spannungspotential liegen.

## Beschreibung

Die Erfindung betrifft eine Schnittstelle einer Kommutierungselektronik zur Regelung von Gleichstrommotoren, insbesondere von Gleichstrommotoren von Ventilatoren.

Drehzahlgeregelte bürstenlose Gleichstrommotoren werden in der Industrie vielfältig eingesetzt, beispielhaft in drehzahlvariablen Verbrennungsluftgebläsen für moderne Gasheizgeräte. Die Ansteuerung dieser Gebläse von einer Steuerelektronik geschieht vielfach über eine standardisierte PWM-Schnittstelle, in der die Steuerelektronik ein PWM-Signal erzeugt, das in der Regel der gewünschten Motorleistung des Gebläses entspricht, z. B. ein PWM-Signal mit einem Tastverhältnis von 10% bedeutet eine Motorleistung von 10% der maximalen Motorleistung. Dabei lässt sich der erforderliche Tastgrad entsprechend den Anforderungen von der Steuerelektronik steuern.

Die Steuerelektronik ist dabei über eine Schnittstelle mit der Kommutierungselektronik zum Kommutieren des EC-Motors verbunden. Regelmäßig ist aus Schutzgründen zwischen der Steuerelektronik und der Kommutierungselektronik eine galvanische Trennung vorgesehen. Die galvanische Trennung kann dabei eingangsseitig im Schnittstellenbereich der Kommutierungselektronik angeordnet sein. Das PWM-Signal wird nach einer solchen galvanischen Trennung von einer im EC-Motor integrierten Elektronik erfasst und von der Motorkommutierungselektronik über einen Treiberbaustein in ein Ansteuersignal für die Motorwicklung umgewandelt.

Entsprechend der jeweiligen Last am Motor stellt sich eine bestimmte Drehzahl für das erhaltene Signal ein, die in der Regel über einen Hallsensor gemessen und über eine (weitere) galvanische Trennung hinaus an das Steuergerät übertragen wird. Das Steuergerät wertet diese Drehzahlinformation, die von den Hallsensoren der Kommutierungselektronik erhalten wird, aus und nimmt bei einer Abweichung zum Sollwert eine Anpassung des PWM-Signales vor.

Aufgrund der hohen Anzahl unterschiedlichster Applikationen wird versucht die Ansteuerung der Motoren über eine standardisierte PWM-Schnittstelle zu ermöglichen. Hierzu befindet sich die Kommutierungslektronik häufig direkt am Motor integriert. Das bedeutet aber, dass sich bei unterschiedlichen Motorleistungen die entsprechenden elektronischen Bauteile der Kommutierungslektronik unterscheiden. Betrachtet man ergänzend die Situation der Hersteller und Anwender, so ist es so, dass die Motorenhersteller motorenseitig die Kommutierungselektronik mit einer Schnittstelle für die Ansteuerelektronik bereitstellen. Die Ansteuerelektronik wiederum erfolgt kundenseitig oder von einem Dritten, regelmäßig aber nicht von dem Motorenhersteller. So stellt z. B. der Hersteller einer Kesselsteuerung die Ansteuerung für die Kommutierungselektronik des Motors eines Ventilators bereit, der im Heizkessel verwendet wird. Somit ergibt sich eine Schnittstelle zwischen der motorseitigen Kommutierungselektronik und der anwenderseitigen Steuerungselektronik. Wenn z. B. Kesseltypabhängig das Sollwertsignal für den Ventilator vorgegeben ist als PWM-Signal, muss der Motorhersteller dieses in eine entsprechende Drehzahl umsetzen.

Um die Vielfalt der Kombinationsmöglichkeiten abzudecken, ist eine Vielzahl von Doppelfunktionen in den Steuerungen vorhanden. Sowohl die kundenseitige Applikationssteuerung (z. B. Kesselsteuerung) als auch die motorseitige Kommutierungselektronik benötigen eine Stromversorgung und Netzfilter, um sowohl elektrische Störungen zu vermeiden (z. B. Störaustrahlung durch schnell schaltende Transistoren an induktiven Lasten) oder um die jeweilige Elektronik vor Störeinflüssen zu schützen. Für eine genaue PWM-Ansteuerung sind schnelle Optokoppler erforderlich, um eine hohe Auflösung der Impulsbreite zu gewährleisten.
Somit sind die Steuerungen insgesamt nicht optimiert und auch teuer und aufwendig.

Ein weiterer Nachteil besteht darin, dass bei Ausführen mit am Motor integrierter Kommutierungselektronik die Anschlusskabel für die Netzspannung und Steuersignale durch ihr Gewicht und ihre Steifigkeit die Schwingungsdämpfer des Motors belasten und die Schwingungseigenschaften beeinflussen.

Wünschenswert wären daher eine Reduzierung der Anschlussleitungen zwischen einem Steuergerät und der Kommutierungselektronik sowie eine Reduzierung der Kosten benötigter elektronischer Bauteile in der Ansteuerelektronik und Kommutierungselektronik. Weiter wäre es wünschenswert das Variantenmanagement für Gebläse mit unterschiedlichen (elektrischen) Leistungen derart zu vereinfachen, dass es keine anwenderseitige Adaption der Ansteuerelektronik erfordert.

Eine naheliegende technische Lösung bestünde in der kompletten Integration aller elektronischen Funktionen der Kommutierungselektronik der Motoren von z. B. Lüftern direkt in die applikationsseitige Steuerelektronik. Gerade das ist aber nicht gewünscht für EC-Motoren mit integrierter Kommutierungselektronik.

Weiter nachteilig ist der Umstand, dass von der Steuerelektronik dann an den Motor schnelle Schaltsignale übertragen werden müssen, die insbesondere bei langen Leitungen über die Leitungslänge Störstrahlung aussenden können und wiederum umfangreiche und kostenintensive Entstörmaßnahmen und EMV-Schutzmaßnahmen erforderlich machen. Weiterhin müsste dazu die Steuerelektronik an den jeweiligen Motor angepasst werden: z.B. an die elektrische Leistungsaufnahme des Motors. Somit entsteht eine hohe Varianz bei den applikationsseitigen Steuergeräten, was unerwünscht und teuer ist.

Der Erfindung liegt daher die Aufgabe zugrunde, vorbesagte Nachteile zu überwinden und eine optimierte und verbesserte Schnittstelle zwischen einer Steuerelektronik und einer Kommutierungselektronik eines EC-Motors vorzuschlagen, die dennoch ein hohes Maß an Flexibilität ermöglicht.

Die Aufgabe wird erfindungsgemäß durch die Merkmale des Anspruchs 1 gelöst.

Ein Grundgedanke der Erfindung besteht in einer Schnittstelle zwischen dem Steuergerät und Motorelektronik in der insbesondere die galvanische Trennung zwischen Steuergerät und Motorelektronik, so angeordnet wird, dass sämtliche Verbindungsleitungen der Schnittstelle nur auf einem Spannungspotential liegen und ferner vorzugsweise eine Funktionsaufteilung der Steuerelektronik und Kommutierungselektronik der Motorelektronik dergestalt erfolgt, dass nur langsame Signale (Soll-Wertsignale für die Drehzahl) übertragen werden müssen.

Langsame Signale im Sinne der vorliegenden Erfindung sind solche Signale, die um wenigstens den Faktor 8, vorzugsweise den Faktor 10 unter der Übertragungsgeschwindigkeit der PWM-Signale liegen (z. B. Sollwert-Signale 2 kHz und PWM-Signale 200 kHz).

Erfindungsgemäß wird dazu eine Schnittstelle umfassend mehrere Schnittstellenverbindungen zwischen einer Steuerungselektronik und einer Motorelektronik eines EC-Motors vorgeschlagen, wobei die Spannungsversorgung der Steuerungselektronik als gleichgerichtete Netzspannung der Motorelektronik über eine Schnittstellenverbindung der Schnittstelle zugeführt wird und die mehreren Schnittstellenverbindungen zwischen der Steuerungselektronik und der Motorelektronik auf einem gemeinsamen Spannungspotential liegen.

Ferner ist mit Vorteil vorgesehen, dass zu den Schnittstellenverbindungen, die auf einem gemeinsamen Spannungspotential liegen, alle oder zumindest die Schnittstellenverbindung zur Gleichspannungsversorgung und die Verbindungsleitung zur Übertragung eines Sollwert-Signals gehören.

Gemäß einer vorteilhaften Ausführungsform der vorliegenden Erfindung ist vorgesehen, dass nur die Steuerungselektronik über einen Netzspannungsanschluss verfügt, während die Motorsteuerung über die Schnittstelle mit der benötigten Spannung versorgt wird.

Weiter vorteilhaft ist eine Ausführung, bei der die Steuerungselektronik über einen Gleichrichter eine gleichgerichtete Spannung, vorzugsweise gefilterte und gesiebte Gleichspannung für die Motorelektronik bereitstellt. Hierzu stellt die Schnittstelle zwei Verbindungen für das Bezugspotential und das Gleichspannungspotential bereit.

Hierbei ist mit Vorteil vorgesehen, dass eine Schnittstellenverbindung das Bezugspotential, das am Ausgang des Gleichrichters aus einer Netzspannung, die am Netzspannungsanschluss anliegt, gebildet wird, der Motorelektronik bereitstellt. Durch diese Maßnahme kann bereits ein aufwändiges Schaltnetzteil bzw. zusätzlicher Gleichrichter eingespart werden.

Es ist in einer bevorzugten Ausgestaltung der Erfindung ferner vorgesehen, das Bezugspotential über die Schnittstellenverbindung der Schnittstelle einem Treiberbaustein der Motorelektronik direkt zuzuführen, was eine besonders kompakte und kostengünstige Lösung ermöglicht.

Gemäß einer vorteilhaften Ausführungsform der vorliegenden Erfindung ist vorgesehen, dass die Steuerungselektronik ferner eine galvanische Trenneinrichtung, vorzugsweise ausgebildet als Optokoppler, besitzt, von der eine Schnittstellenverbindung zur Übertragung des Sollwertsignals für die Drehzahlregelung zur Motorelektronik führt. Dabei ist es besonders von Vorteil, wenn eine oder die vorgenannte Schnittstellenverbindung zur Übertragung des Soll-Wertsignals für die Drehzahlregelung als eine bi-direktionale Verbindung ausgebildet ist, um erfasste Ist-Wertsignale der Drehzahl des Motors von der Motorelektronik über die gleiche Verbindung (mit entgegengesetzter Signalflussrichtung) an die Steuerungselektronik zu übertragen. Je nach Signalaufbereitung der Soll- und Ist-Wertsignale lässt sich eine synchrone Datenkommunikation realisieren.

Es ist weiter mit Vorteil vorgesehen, wenn die zuvor genannte bi-direktional ausgelegte Schnittstellenverbindung zur Übertragung des Soll-Wertsignals direkt an eine Kommutierungselektronik der Motorsteuerung ausgebildet ist. Auf diese Weise kann das Soll-Wertsignal z. B. über den Optokoppler auf die besagte bi-direktionale Verbindungsleitung ausgegeben werden und über die Schnittstelle der Kommutierungselektronik unmittelbar zugeführt werden, die das Signal zur Kommutierung verarbeitet und über einen Treiberbaustein als Steuersignal dem Motor zugeführt wird.

Mit der Idee der vorliegenden Erfindung erfolgt eine räumliche und funktionale Aufteilung, wodurch die Steuerungselektronik und die Motorelektronik auf räumlich voneinander vollständig getrennten Leiterplatten angeordnet sind und nur über die Schnittstelle miteinander elektrisch und signaltechnisch verbunden sind, allerdings auf gemeinsame Systemressourcen zugreifen können oder diese nutzen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt.

Es zeigt:
- Fig. 1: eine aus dem Stand der Technik bekannte schematische Schaltungsanordnung mit einer externen Steuerung, einer Schnittstelle und einer Motorsteuerung und
- Fig. 2: eine erfindungsgemäße Schaltungsanordnung mit einer externen Steuerung, einer Schnittstelle und einer Motorsteuerung.

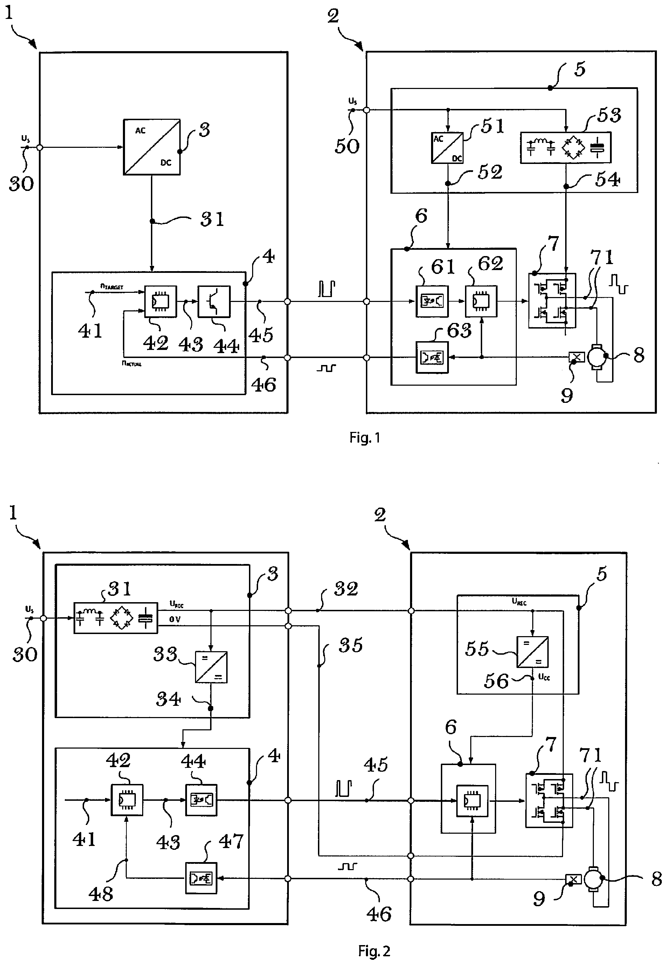

Im Folgenden wird die Erfindung mit Bezug auf die Figuren 1 und 2 näher erläutert.

Die Figur 1 zeigt eine aus dem Stand der Technik bekannte schematische Schaltungsanordnung mit einer externen Steuerungselektronik 1, einer Schnittstelle 10 und einer Motorsteuerung 2 für den EC-Motor 8 eines Gebläses.

In der Steuerungselektronik 1 wird herkömmlich ein PWM-Signal erzeugt und über die Verbindungsleitung 45 nach einer galvanischen Trennung 61 von der im Gebläse integrierten Motorelektronik 2 erfasst und von der Motorkommutierungselektronik 62 über einen Motortreiber (Treiberbaustein) 7 in ein Ansteuersignal 71 für den Motor 8 umgewandelt.

Entsprechend der jeweiligen Last des Gebläses entsteht eine Drehzahl, die in der Regel über einen Hallsensor 9 gemessen und über eine galvanische Trennung 63 an das Steuerungselektronik 1 über die Schnittstelle 10 und zwar über die Verbindungsleitung 46 übertragen wird. Das Steuergerät wertet diese Drehzahlinformation aus.

Bei der Anordnung nach Figur 1 besitzt sowohl die externe Steuerungselektronik 1 einen Netzspannungsanschluss 30 und auch die Motorelektronik 2 einen Netzspannungsanschluss 50. Es sind eine galvanische Trennung 61 und eine zweite galvanische Trennung 63 in der Motorsteuerung 2 vorgesehen. Die eine galvanische Trennung 61 dient der Trennung der Übertragungsstrecke von der Steuerungselektronik 1 zur Motorsteuerung 2 und die zweite galvanische Trennung 63 ist erforderlich zur Trennung der Übertragungsstrecke der Drehzahlübertragung an die Steuerungselektronik 1. Ferner stellt die Steuerungselektronik 1 eine interne Versorgungsspannung 31 bereit und wird diese am Eingang des Spannungswandlers 4 eingespeist. In ähnlicher Weise stellt der Spannungswandler 51 eine interne Versorgungsspannung 52 der Motorkommutierungselektronik bereit.

Die Regelungselektronik 4 erzeugt mittels des Drehzahlreglers 42 über eine Treiberstufe 44 aus der Soll-Drehzahl 41 das PWM-Signal für die Drehzahlregelung des Motors 8. Die Regelungselektronik 4 erhält ferner die Ist-Drehzahl über die Rückleitung 46. Hierzu ist ein Drehzahlgeber 9 (Hallsensor) vorgesehen.

Im Vergleich dazu zeigt die Figur 2 eine Ausführungsform einer erfindungsgemäßen Schaltungsanordnung, ebenfalls mit einer externen Steuerung 1, einer Schnittstelle 10 und einer Motorsteuerung 2. Gleiche Bezugszeichen in den Figuren zeigen auf gleiche strukturelle bzw. funktionale Merkmale hin. Wie zu erkennen ist, benötigt diese Anordnung lediglich einen Netzanschluss 30 an der Steuerungselektronik 1.

Die Schnittstelle 10 umfasst mehrere Schnittstellenverbindungen 32, 35, 45, 46 zwischen der Steuerungselektronik 1 und einer Motorelektronik 2, wobei die Spannungsversorgung der Steuerungselektronik 1 als gleichgerichtete Netzspannung der Motorelektronik 2 über die Schnittstellenverbindung 32 zugeführt wird. Die Schnittstellenverbindungen 32, 45, 46 zwischen der Steuerungselektronik 1 und der Motorelektronik 2 befinden sich auf einem gemeinsamen relativen Spannungspotential gegenüber dem Bezugspotential (hier 0V) an der Schnittstellen-verbindung 35. Ferner benötigt die so ausgelegte Anordnung dadurch auch nur eine galvanische Trenneinrichtung.

Die galvanische Trennung zwischen Regelungselektronik 4 und der netzspannungsgebundenen Gebläseelektronik 2 rein über die Steuersignale 44 und 47 erlaubt zusätzlich eine preiswerte (da eine galvanisch Trennung dann nicht erforderlich) interne Spannungsversorgung 55 für die Motorkommutierungselektronik 6.

Die PWM-Signalleitung ist mit dem Bezugszeichen 45 und die Drehzahlsignalleitung mit dem Bezugszeichen 46 in der Figur 2 dargstellt.

Das aus dem Stand der Technik bekannt PWM-Signal mit Drehzahlrückmeldung wird in dem beispielhaften erfindungsgemäßen Ausführungsbeispiel nach Figur 2 ersetzt durch die Kommunikationsschnittstelle (Verbindungen 45, 46) zwischen der Regelungselektronik 4 und Motorkommutierungselektronik 6, die sowohl den Drehzahlsollwert wie auch den Ist-Wert vom Drehzahlgeber 9 des Motors 8 digital überträgt. Da nicht mehr kontinuierlich ein PWM-Signal mit steilen Flanken übertragen werden muss, sondern lediglich ein Soll-Wert für die Drehzahl, der von der Kommutierungselektronik 6 über den Motortreiber 7 direkt in ein Steuersignal 71 für den Motor 8 umgesetzt wird, können vergleichsweise langsame Signale übertragen werden. Das ermöglicht auch die Verwendung von langsameren preiswerteren Optokoppler für die galvanische Trennung. Dabei ist der Spannungsbezug über die Verbindung 35 für die Kommunikationsschnittstelle der gleiche wie für die gleichgerichtete Netzspannung an der Verbindung 32. Die galvanische Trennung geschieht in der Weise, dass das Kommunikationssignal netzspannungsgebunden ist, das heißt es kann über das gleiche Kabel geführt werden, wie die Versorgungsspannung der Motorelektronik 2. Es kommt zu keiner Durchmischung von Kleinspannungs- und Netzspannungssignalen und die Kommunikation erfordert somit nur eine zusätzliche Verbindungsleitung.

## Patentansprüche

1. Schnittstelle (10) umfassend mehrere Schnittstellenverbindungen (32, 35, 45, 46) zwischen einer Steuerungselektronik (1) und einer Motorelektronik (2) eines EC-Motors (8), wobei die Spannungsversorgung der Steuerungselektronik (1) als gleichgerichtete Netzspannung der Motorelektronik (2) über eine Schnittstellenverbindung (32) zugeführt wird und die mehreren Schnittstellenverbindungen (32, 35, 45, 46) zwischen der Steuerungselektronik (1) und der Motorelektronik (2) auf einem gemeinsamen Spannungspotential liegen.

2. Schnittstelle (10) gemäß Anspruch 1, **dadurch gekennzeichnet, dass** zu den Schnittstellenverbindungen (32, 35, 45, 46), die auf einem gemeinsamen Spannungspotential liegen, alle oder zumindest die Schnittstellenverbindung (32) und die Verbindungsleitung (45) zur Übertragung eines digitalen oder niederfrequenten Sollwert-Signals gehören.

3. Schnittstelle (10) gemäß einem der vorhergehenden Ansprüche, **dadurch gekennzeichnet, dass** nur die Steuerungselektronik (1) über einen Netzspannungsanschluss (30) verfügt.

4. Schnittstelle (10) gemäß einem der vorhergehenden Ansprüche, **dadurch gekennzeichnet, dass** die Steuerungselektronik (1) über einen Gleichrichter (30) eine gleichgerichtete Spannung für die Motorelektronik (2) bereitstellt.

5. Schnittstelle (10) gemäß einem der Ansprüche 1 bis 4, **dadurch gekennzeichnet, dass** eine Schnittstellenverbindung (35) das Bezugspotential, das am Ausgang des Gleichrichter (30) aus einer Netzspannung am Netzspannungsanschluss (30) gebildet wird, der Motorelektronik (2) bereitstellt.

6. Schnittstelle (10) gemäß Anspruch 5, **dadurch gekennzeichnet, dass** das Bezugspotential über die Schnittstellenverbindung (35) der Schnittstelle (10) einem Treiberbaustein (7) der Motorelektronik (2) zugeführt wird.

7. Schnittstelle (10) gemäß einem der vorhergehenden Ansprüche, **dadurch gekennzeichnet, dass** die Steuerungselektronik (1) eine galvanische Trenneinrichtung (44), vorzugsweise ausgebildet als Optokoppler, besitzt, von der eine Schnittstellenverbindung (44, 45) zur Übertragung des Sollwertsignals für die Drehzahlregelung zur Motorelektronik (2) führt.

8. Schnittstelle (10) gemäß einem der vorhergehenden Ansprüche 6 bis 7, **dadurch gekennzeichnet, dass** dem Treiberbaustein (7) der Motorelektronik (2) das Soll-Wertsignal für die Drehzahl über eine in der Motorsteuerung (2) vorgesehene Kommutierungselektronik (6) zugeführt wird.

9. Schnittstelle (10) gemäß einem der vorhergehenden Ansprüche, **dadurch gekennzeichnet, dass** die Steuerungselektronik (1) und die Motorelektronik (2) auf räumlich voneinander vollständig getrennten Leiterplatten angeordnet sind und nur über die Schnittstelle (10) miteinander elektrisch und signaltechnisch verbunden sind.
